## Europäisches Patentamt
## European Patent Office
## Office européen des brevets

(19)

(11) Numéro de publication: **0 018 876**
**B1**

(12)

# FASCICULE DE BREVET EUROPEEN

(45) Date de publication du fascicule du brevet:
01.12.82

(51) Int. Cl.³: **B 65 G 47/51**

(21) Numéro de dépôt: **80400496.8**

(22) Date de dépôt: **15.04.80**

(54) **Appareil pour la mise en tas et la reprise de matériaux en vrac.**

(30) Priorité: **27.04.79 FR 7910792**

(43) Date de publication de la demande:
**12.11.80 Bulletin 80/23**

(45) Mention de la délivrance du brevet:
**01.12.82 Bulletin 82/48**

(84) Etats contractants désignés:
**BE DE GB IT NL**

(56) Documents cités:
**DE-A-2 544 270**
**DE-B-1 163 245**
**DE-B-1 217 278**
**FR-A-1 426 508**
**FR-A-2 362 063**
**US-A-3 621 978**

(73) Titulaire: **FIVES-CAIL BABCOCK, Société anonyme, 7 rue Montalivet, F-75383 Paris Cedex 08 (FR)**

(72) Inventeur: **Grandin, Daniel, 1, rue Jean Pierre Laurens, F-92260 Fontenay aux Roses (FR)**

(74) Mandataire: **Fontanié, Etienne, FIVES-CAIL BABCOCK 7, rue Montalivet, F-75383 Paris Cedex 08 (FR)**

ACTORUM AG

Appareil pour la mise en tas et la reprise de matériaux en vrac

La présente invention concerne la mise en tas et la reprise de matériaux en vrac sur les parcs de stockage.

On connaît déjà (FR-A-1 426 508, DE-B-1 163 245, US-A-3 621 978) un appareil de manutention comprenant un châssis mobile sur une voie traversant un parc de stockage dans le sens de sa longueur, une flèche munie d'un transporteur à bande réversible, ladite flèche étant montée sur un support pivotant autour d'un axe vertical sur le châssis et étant inclinable autour d'un axe horizontale du support, un transporteur élévateur d'alimentation en matériaux qui est mobile avec le châssis, et un transporteur de parc disposé suivant l'axe de la voie.

Lors d'une opération de mise en tas, les matériaux amenés par le transporteur élévateur sont déversés sur la bande du transporteur de flèche par l'intermédiaire d'une goulotte usuelle.

Lors d'une opération de reprise, les matériaux prélevés par une roue-pelle montée sur l'extrémité libre de la flèche sont transportés en sens inverse par la bande du transporteur de flèche d'où ils sont déversés, par l'intermédiaire d'une goulotte, sur le transporteur de parc qui les amène à un poste d'utilisation.

L'invention a sortout pour but de perfectionner l'appareil du genre précité en vue d'une plus grande souplesse d'exploitation.

Elle vise essentiellement à réaliser un appareil offrant la possibilité d'alimenter en matériaux le poste d'utilisation simultanément à une opération de mise en tas.

L'invention a plus précisément pour objet un appareil pour la mise en tas et la reprise de matériaux en vrac comprenant un châssis mobile sur une voie traversant un parc de stockage dans le sens de sa longueur, une flèche munie d'un transporteur à bande réversible, ladite flèche étant montée sur un support pivotant autour d'un axe vertical sur le châssis et étant inclinable autour d'un axe horizontal du support, un transporteur élévateur d'alimentation en matériaux, mobile avec le châssis, et un transporteur de parc disposé suivant l'axe de la voie, caractérisé en ce qu'il comporte une goulotte à deux sorties communiquant par un trop-plein, ladite goulotte étant munie à sa partie supérieure d'un déflecteur basculant permettant de diriger sélectivement les matériaux déversés dans la goulotte par le transporteur élévateur vers l'une ou l'autre des deux sorties, l'une de ces sorties étant prévue pour alimenter la bande du transporteur de flèche, l'autre sortie étant prévue pour alimenter le transporteur de parc par l'intermédiaire d'un extracteur associé à des moyens de réglage de débit, les matériaux en excédent étant évacués par le trop-plein vers la précédente sortie.

L'extracteur est avantageusement constitué par un transporteur à bande disposé horizontalement sous la sortie correspondante de la goulotte.

Il est avantageusement prévu, au-dessus dudit transporteur à bande, un volet vertical délimitant la veine d'écoulement des matériaux transportés.

Les moyens de réglage du débit de l'extracteur comprennent un dispositif de mesure du débit du transporteur de parc délivrant un signal de mesure, et une unité comparant ledit signal avec un signal d'affichage et délivrant un signal qui commande le réglage de la vitesse de rotation de l'extracteur.

En variante, le signale délivré par ladite unité commande le réglage de la hauteur du volet.

Le dispositif de mesure du débit du transporteur de parc est avantageusement constitué par une bascule.

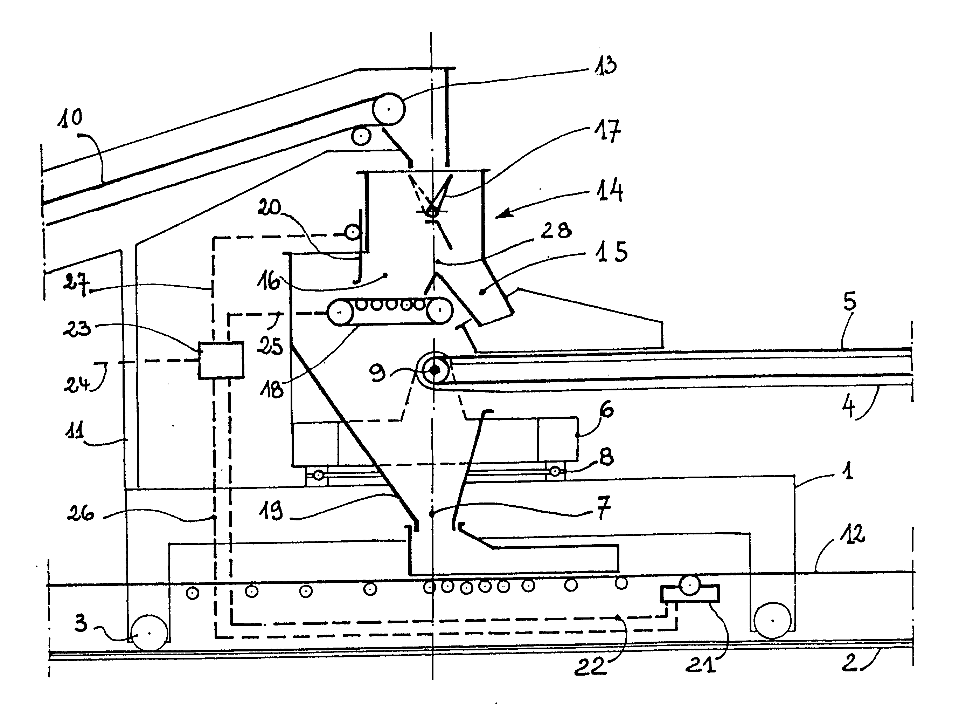

L'invention sera mieux comprise en se référant à la description qui suit, faite en regard du dessin annexé, concernant une forme particulière de réalisation donnée à titre d'exemple non limitatif.

La figure unique est une vue en coupe élévation de l'appareil.

Sur la figure, le repère 1 désigne le châssis de l'appareil quel est mobile le long d'une voie 2 disposée, par exemple, sur une banquette aménagée entre deux tas ou deux rangées de tas s'étendant longitudinalement de part et d'autre de ladite banquette, sur un parc de stockage. La voie 2 est formée par des rails sur lesquels viennent rouler des galets 3 prévus à la base du châssis 1.

Le repère 4 désigne une flèche portant un transporteur 5 à bande réversible et dont l'extrémité libre est munie, de façon connue en soi, d'une roue-pelle non représentée. La flèche 4 est montée sur un support 6 pivotant, autour d'un axe vertical 7, sur le châssis 1 par l'intermédiaire d'une couronne à roulements 8. La flèche 4 est par ailleurs inclinable autour d'un axe horizontal 9 du support 6.

Les moyens de commande de l'inclinaison de la flèche et les moyens d'équilibrage de celleci, de types usuels, ne sont pas représentés.

Le repère 10 désigne un transporteur élévateur, à bande par exemple, prévu pour assurer l'alimentation en matériaux en vue d'une opération de mise en tas. Le support 11 de ce transporteur élévateur est solidaire du châssis 1 avec lequel il est déplaçable. Le repère 12 désigne un transporteur de parc du type à bande transporteuse, disposé suivant l'axe de la voie 2, et destiné à desservir le transporteur élévateur 10 et un ou plusieurs postes d'utilisation des matériaux.

Sous le tambour de tête 13 du transporteur élévateur 10 est aménagée une goulotte repérée 14 dans son ensemble. Cette goulotte présente à sa partie inférieure deux sorties, respectivement 15 et 16, communiquant par un trop-plein 28. Un déflecteur basculant 17 prévu à la partie supérieure de la goulotte 14 permet de diriger sélectivement les matériaux déversés par le transporteur élévateur 10 dans ladite goulotte, vers la sortie 15 ou vers la sortie 16.

Lorsque le déflecteur 17 est amené dans la position représentée en traits interrompus, les matériaux déchargés par le transporteur élévateur 10 sont dirigés, à travers la goulotte 14, vers la sortie 15 d'où ils sont déversés sur la bande du transporteur 5 au-dessus de laquelle est disposée ladite sortie. La totalité du débit de matériaux est alors mise en tas par la bande du transporteur 5 circulant dans le sens approprié.

Lorsque le déflecteur 17 est amené das la position représentée en traits pleins, les matériaux déchargés par le transporteur élévateur 10 sont dirigés, à travers la goulotte 14, vers la sortie 16. Dans ce cas, une partie du débit est acheminée vers le transporteur de parc 12. A cet effet, il est prévu, au-dessous de la sortie 16, un extracteur 18 avantageusement constitué par un transporteur à bande. Ce dernier entraîne les matériaux qui se déversent sur le transporteur de parc 12 par l'intermédiaire d'une goulotte 19 placée au-dessous de la sortie 16. Un volet vertical 20 disposé au-dessus de l'extracteur 18 délimite en hauteur la veine d'écoulement des matériaux transportés par ledit extracteur. La position de ce volet peut être modifié par translation verticale.

Le débit de l'extracteur 18 est réglé, comme il sera expliqué par la suite, de manière à obtenir à sa sortie un débit de matériaux égal à un débit affiché. Si le débit du transporteur élévateur 10 est supérieur au débit à déverser sur le transporteur de parc 12, les matériaux en excédent s'accumulent sur l'extracteur 18 et, lorsqu'une certaine hauteur est atteinte, ils se déversent par gravité sur la bande du transporteur 5 par la sortie 15, à partir du trop-plein 28.

Lors d'une opération de reprise le transporteur élévateur 10 est arrêté. Le sens de circulation de la bande du transporteur 5 est inversé et les matériaux prélevés par la rouepelle sont transportés par ladite bande qui les déverse sur le transporteur de parc 12 à travers la goulotte 19.

On va maintenant décrire les moyens de réglage du débit de l'extracteur 18.

Le transporteur de parc 12 est muni d'un dispositif de mesure du débit de matériaux transportés. Ce dispositif est constitué par une bascule 21 qui délivre un signal représentatif de la valeur dudit débit. Ce signal est dirigé par la ligne 22 vers une unité 23 qui compare ledit signal à un signal d'affichage fourni à ladite unité par la ligne 24. L'unité délivre alors par la ligne 25 un signal qui commande le réglage de la vitesse de rotation de l'extracteur 18.

Suivant une variante, le signal délivré par la bascule 21 est dirigé par la ligne 26 sur l'unité 23. Cette dernière délivre alors par la ligne 27 un signal qui commande le reglage de la hauteur du volet 20.

Quelle que soit la méthode de réglage utilisée, l'écart entre le débit réel du transporteur de parc 12 et le débit affiché provoque la modification d'un paramètre (vitesse de l'extracteur 18 ou hauteur du volet 20) auquel est lié le débit.

Bien que l'invention ait été décrite en référence à une forme particulière de réalisation, il va de soi qu'elle n'y est en rien limitée et que des modifications peuvent lui être apportées sans sortir de son domaine. On pourra notamment remplacer l'un quelconque des moyens décrits (bascule 21 par exemple) par un moyen techniquement équivalent. L'invention couvre donc, outre l'exemple représenté, ses différentes variantes d'exécution possibles.

**Revendications**

1. Appareil pour la mise en tas et la reprise de matériaux en vrac sur un parc de stockage traversé par une voie (2) dans le sens de sa longueur, un trasporteur de parc (12) étant disposé suivant l'axe de la voie, comprenant un châssis mobile (1) sur ladite voie, une flèche (4) munie d'un trasporteur à bande reversible (5), un transporteur élévateur d'alimentation (10) en matériaux qui est mobile avec le châssis (1), et une goulotte (14) à deux sorties (15, 16), la première sortie (15) étant prévue pour alimenter la bande du transporteur de flèche (5) et la deuxième sortie (16) étant prévue pour alimenter la bande du transporteur de parc (12), caractérisé en ce que la goulotte (14) est munie, à sa partie supérieure, d'un déflecteur basculant (17) permettant de diriger sélectivement les matériaux déversés dans ladite goulotte par le transporteur élévateur (10) vers l'une ou l'autre des deux sorties (15 et 16), et en ce que l'une des sorties de la goulotte (14) est munie d'un extracteur (18) associé à des moyens de réglage de débit, les matériaux en excédent étant évacués par l'autre sortie par l'intermédiaire d'un trop-plein (28) faisant communiquer les deux sorties (15 et 16).

2. Appareil suivant la revendication 1, caractérisé en ce que l'extracteur (18) est constitué par un trasporteur à bande disposé horizontalement sous la sortie correspondante (15 ou 16) de la goulotte (14).

3. Appareil suivant la revendication 2, caractérisé en ce qu'il est prévu, au-dessus dudit transporteur à bande, un volet vertical (20) délimitant la veine d'écoulement des matériaux transportés.

4. Appareil suivant l'une quelconque des revendications 1 à 3, caractérisé en ce que les moyens de réglage du débit de l'extracteur (18) comprennent un dispositif de mesure du débit du transporteur (5 ou 12) alimenté par ledit extracteur, ledit dispositif délivrant un signal de mesure, et une unité (23) comparant ledit signal avec un signal d'affichage et délivrant un signal qui commande le réglage de la vitesse de rotation de l'extracteur (18).

5. Appareil suivant l'une quelconque des revendications 1 à 3, caractérisé en ce que les moyens de réglage du débit de l'extracteur (18) comprennent un dispositif de mesure du débit du transporteur (5 ou 12) alimenté par ledit extracteur, ledit dispositif délivrant un signal de mesure, et une unité (23) comparant ledit signal avec un signal d'affichage et délivrant un signal qui commande le réglage de la hauteur du volet (20).

6. Appareil suivant l'une des revendications 4 ou 5, caractérisé en ce que le dispositif de mesure du débit du transporteur (5 ou 12) alimenté par l'extracteur (18) est constitué par une bascule (21).

7. Appareil suivant l'une quelconque des revendications 1 à 6, caractérisé en ce que la sortie de la goulotte (14) munie de l'extracteur (18) est la deuxième sortie (16).

## Patentansprüche

1. Vorrichtung zum Lagern und Abtragen von Schüttguthalden auf einem Lagerplatz, der in Längsrichtung durch eine Bahn (2) durchquert wird, wobei ein Lagerplatzförderer (12) entsprechend der Bahnachse angeordnet ist, bestehend aus einem auf dieser Bahn fahrbaren Gestell (1), einem mit einem reversiblen Förderband (5) ausgerüsteten Ausleger (4), einem zusammen mit dem Gestell (1) fahrbaren Schüttgutaufgabeelevator (10) und einer Schurre (14) mit zwei Auslauföffnungen (15 und 16), wobei die erste Auslauföffnung (15) für die Aufgabe des Auslegerbandes (5) und die zweite Auslauföffnung (16) für die Aufgabe des Lagerplatzförderers (12) vorgesehen ist, dadurch gekennzeichnet, dass die Schurre (14) an ihrem Oberteil mit einem kippbaren Ablenkblech (17) versehen ist, wodurch die in diese Schurre durch den Schüttgutaufgabeelevator (10) ausgeschütteten Schüttgüter zur Wahl auf die eine oder die andere Auslauföffnung (15 bzw. 16) geleitet werden können, und dass eine der Auslauföffnungen der Schurre (14) eine Abzugsvorrichtung (18) in Verbindung mit Mitteln zur Mengenregelung besitzt, wobei das überschüssige Schüttgut über einen Überlauf (28), der die beiden Auslauföffnungen (15 und 16) miteinander verbindet, durch die andere Auslauföffnung abläuft.

2. Vorrichtung nach Anspruch 1, dadurch gekennzeichnet, dass die Abzugsvorrichtung (18) aus einem waagerecht unter der entsprechenden Auslauföffnung (15 bzw. 16) angeordneten Bandförderer besteht.

3. Vorrichtung nach Anspruch 2, dadurch gekennzeichnet, dass über diesem Abzugsbandförderer eine senkrechte Schiebeklappe (20) zur Abgrenzung des Fördergutstroms vorgesehen ist.

4. Vorrichtung nach einem der Ansprüche 1 bis 3, dadurch gekennzeichnet, dass die Mittel zur Mengenregelung der Abzugsvorrichtung (18) eine Vorrichtung zur Messung der Fördermenge des durch die Abzugsvorrichtung beschickten Förderers (5 oder 12) umfassen, wobei diese Messvorrichtung ein Mess-Signal liefert, und eine Einheit (23) aufweisen, die dieses Signal mit einem Vorgabe-Signal vergleicht und ein Signal liefert, das die Regelung der Drehzahl der Abzugsvorrichtung (18) steuert.

5. Vorrichtung nach einem der Ansprüche 1 bis 3, dadurch gekennzeichnet, dass die Mittel zur Mengenregelung der Abzugsvorrichtung (18) eine Vorrichtung zur Messung der Fördermenge des durch die Abzugsvorrichtung beschickten Förderers (5 oder 12) umfassen, wobei diese Messvorrichtung ein Mess-Signal liefert, und eine Einheit (23) aufweisen, die dieses Mess-Signal mit einem Vorgabe-Signal vergleicht und ein Signal liefert, das die Höheneinstellung der Schiebeklappe (20) steuert.

6. Vorrichtung nach einem der Ansprüche 4 oder 5, dadurch gekennzeichnet, dass die Vorrichtung zur Messung der Fördermenge des durch die Abzugsvorrichtung (18) beschickten Förderers (5 oder 12) aus einer Waage (21) besteht.

7. Vorrichtung nach einem der Ansprüche 1 bis 6, dadurch gekennzeichnet, dass die Auslauföffnung der Schurre (14), die mit der Abzugsvorrichtung (18) ausgerüstet ist, die zweite Auslauföffnung (16) ist.

## Claims

1. Apparatus for stacking and reclaiming bulk materials in a storage yard crossed lengthwise by a track (2), a yard conveyor (12) being located along the track axis, the apparatus comprising a frame (1) which moves along this track, a boom (4) provided with a reversible belt conveyor (5), a materials feed elevator conveyor (10) which moves with the frame (1) and a chute (14) with two outlets (15, 16) the first outlet (15) being provided for feeding the belt of the boom conveyor (5) and the second outlet (16) being provided for feeding the belt of the yard conveyor (12), characterized by the fact that the chute (14) is provided, at the top, with a swinging deflector (17) which makes it possible to direct the materials discharged into the said chute by the elevator conveyor (10) selectively to either one of two outlets (15 and 16), and by the fact that one of the chute (14) outlets is provided with an extraction unit (18) associated with flow-rate control means, the excess materials being discharged through the other outlet via an overflow (28) which connects both outlets (15 and 16).

2. Apparatus according to claim 1, characterized by the fact that the extraction unit (18) consists of a belt conveyor which is disposed horizontally under the corresponding outlet (15 or 16) of the chute (14).

3. Apparatus according to claim 2, characterized by the fact that a vertical gate (20) has been provided for above the said belt conveyor, which delimits the stream of the transported materials.

4 Apparatus according to any one of claims 1 to 3, characterized by the fact that the extracting unit (18) flow-rate control means include a flow-rate measuring device for the conveyor (5 or 12) which is fed by this extracting unit, the said device delivering a measuring signal, and a unit (23) which compares the said signal with a setting signal and which delivers a signal which controls the adjustment of the extracting unit rotation speed adjustment.

5. Apparatus according to any one of claims 1 to 3, characterized by the fact that the extracting unit (18) flow-rate control means include a flow-rate measuring device for the conveyor (5 or 12) fed by this extracting unit, the said device delivering a measuring signal, and a unit (23) which compares the said with a setting signal, and a unit (23) which compares the said signal with a setting signal and which delivers a signal which controls the gate (20) height adjustment.

6. Apparatus according to any one of claims 4 or 5, characterized by the fact that the flow-rate measuring device for conveyor (5 or 12) fed by the extracting unit (18) consists of a weigh-scale (21).

7. Apparatus according to any one of claims 1 to 6, characterized by the fact that the outlet of the chute (14) provided with the extracting unit (18) is the second outlet (16).